# EUROPÄISCHE PATENTSCHRIFT

(11) **EP 0 897 495 B1**
(45) Veröffentlichungstag und Bekanntmachung des Hinweises auf die Patenterteilung: **15.09.1999**
(21) Anmeldenummer: 97923754.2
(22) Anmeldetag: 24.04.1997
(51) Int. Cl.: F16H 55/30, B65G 23/06

(54) **KETTENSTETIGFÖRDERER-ANTRIEBSKETTENRAD ZUR VERWENDUNG IM BERGBAU**
CHAIN WHEEL IN CONTINUOUS CHAIN TRANSPORTERS FOR THE MINING INDUSTRY
BARBOTIN DANS TRANSPORTEURS CONTINUS A CHAINE UTILISES DANS L'INDUSTRIE MINIERE

(30) Priorität: 08.05.1996 DE 19618395
(43) Veröffentlichungstag der Anmeldung: 24.02.1999
(73) Patentinhaber: Wollbrecht, Michael, 58313 Herdecke (DE)
(72) Erfinder: Wollbrecht, Michael, 58313 Herdecke (DE)
(74) Vertreter: Patentanwälte Gesthuysen, von Rohr, Weidener, Häckel
(86) Internationale Anmeldenummer: DE9700823
(87) Internationale Veröffentlichungsnummer: WO9742434

(56) Entgegenhaltungen:
- DE-A- 2 308 000
- DE-A- 2 817 968
- DE-U- 29 608 293
- FR-A- 762 325
- FR-A- 2 485 494
- GB-A- L26 574
- US-A- 5 295 917

## Beschreibung

Die Erfindung betrifft ein Kettenstetigförderer-Antriebskettenrad zur Verwendung im Bergbau, bestehend aus zwei Kettenradteilstücken mit radial gerichteten Trennstellen entsprechend den Merkmalen des Oberbegriffs von Anspruch 1.

Derartige geteilte Antriebskettenräder sind im Stand der Technik bekannt, siehe z.B. die DE-A-2 817 968.

Im Stand der Technik sind an den Trennstellen an axialen Verlängerungen der Kettenradteilstücke tangential gerichtete Verbindungsschrauben vorgesehen (sechs auf jeder Seite). Da die Trennstelle nicht spaltfrei zur Anlage gebracht werden kann, sondern im Regelfall ein Spalt von ca. 0,4 mm bleibt und die am Kettenrad angreifenden Kräfte bei einer üblichen Umdrehungsgeschwindigkeit von 60 Umdrehungen pro Minute erheblich sind, tritt es im Stand der Technik häufig auf, daß die Verbindungsschrauben abreißen, und zwar wegen der elastischen Aufbiegung des Kettenrades an der Trennstelle. Beim Lastangriff der Kette, die mit dem Antriebskettenrad in Eingriff ist, hebt quasi das jeweilige Segment an der Trennstelle um ca. 0,5 mm ab, woraus der Effekt resultiert, daß die Verbindungsschrauben abreißen.

Dies führt zu ständigen Störungen im Betrieb, was hohe Ausfallzeiten und damit beträchtliche Kostennachteile verursacht. Ausgehend von diesem Stand der Technik liegt der Erfindung die Aufgabe zugrunde, ein Antriebskettenrad gattungsgemäßer Art zu schaffen, welches den auftretenden Kräften ohne Abriß der Verbindungsschrauben standhalten kann.

Zur Lösung dieser Aufgabe werden die im Anspruch 1 aufgeführten Merkmale vorgeschlagen.

Bevorzugt ist dabei vorgesehen, daß die paßfederartigen Mittel aus an jeder Trennstelle angeordneten Bolzen bestehen, die in parallel zueinander und parallel zur Zusammenfügungsrichtung der Teilstücke gerichtete passende Ausnehmungen eingesetzt sind.

Besonders bevorzugt ist vorgesehen, daß die paßfederartigen Mittel aus Profilstäben, insbesondere quadratischen oder rechteckigen Querschnitts, bestehen, die in achsparallel zur Kettenradachse gerichtete Ausnehmungen der beiden Teilstücke eingreifen, wobei die Einsatzrichtung der Profilstäbe in die Ausnehmungen parallel zur Zusammenfügungsrichtung der Teilstücke verläuft.

Dabei sind die Profilstäbe mit ihrer Längsachse parallel zur Kettenradachse ausgerichtet, um eine möglichst große Abstützwirkung zu erreichen.

Zudem ist bevorzugt vorgesehen, daß die paßfederartigen Mittel jeweils zur Hälfte ihres Querschnittes oder ihrer Länge passend in jeweils eine Ausnehmung der beiden Teilstücke einsetzbar sind.

Besonders bevorzugt ist auch, daß die paßfederartigen Mittel Demontagehilfsschrauben aufweisen, mittels derer sie aus dem Paßsitz der Ausnehmung herausdrängbar sind.

Durch die erfindungsgemäße Ausbildung (Anordnung von Paßfedern im Bereich der Trennstellen, insbesondere im Mittelbereich des Kettenrades) wird ein Aufbiegen der Trennstelle beim Lastangriff der Kette vermieden. Der im Stand der Technik auftretende Effekt, daß die Kettenradteilstücke an der Trennstelle bei der Umdrehung jeweils abheben, wird durch die Anordnung der paßfederartigen Mittel in der Trennstelle unterbunden. Hierdurch sind die Verbindungsschrauben von Biegekräften weitgehend entlastet und überwiegend nur auf Zug belastet, so daß die Gefahr des Abreißens der Schrauben weitestgehend unterbunden ist.
Durch die Anordnung von Demontagehilfsschrauben wird der Ausbau der paßfederartigen Mittel erleichtert, wobei die Demontagehilfsschrauben gleichzeitig zur Vorfixierung der paßfederartigen Mittel an einem der beiden Kettenradteilstücke (Segmente) dienen kann. Bei der Anordnung von bolzenartigen Elementen als paßfederartige Mittel ist die Anordnung von mehreren solchen Bolzen an jeder Trennstelle bevorzugt.

Ein Ausführungsbeispiel der Erfindung ist in der Zeichnung dargestellt und im folgenden näher beschrieben.

Es zeigt:

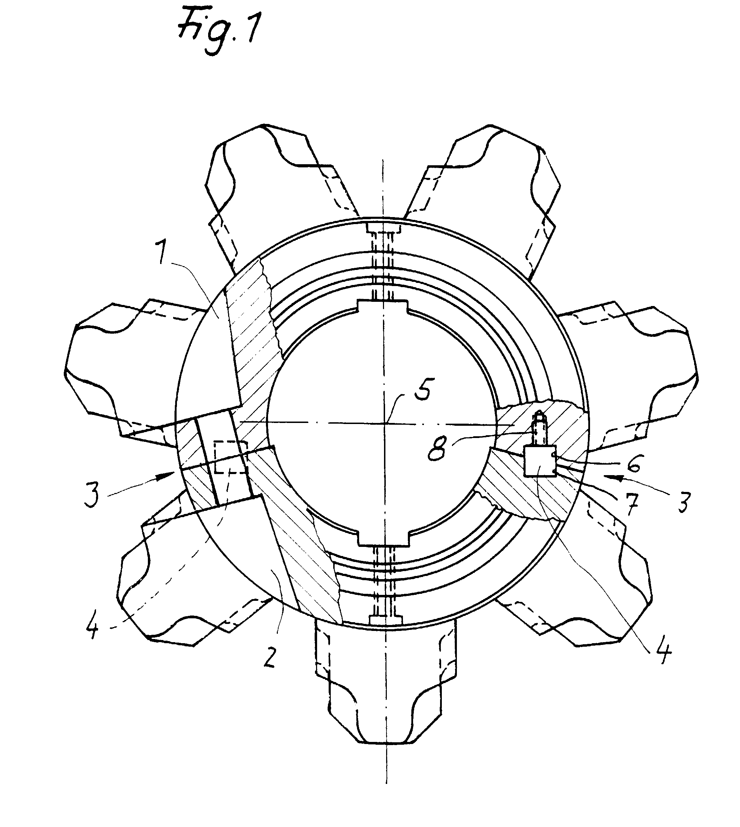

- Fig. 1: ein Antriebskettenrad in Seitenansicht, teilweise aufgebrochen;

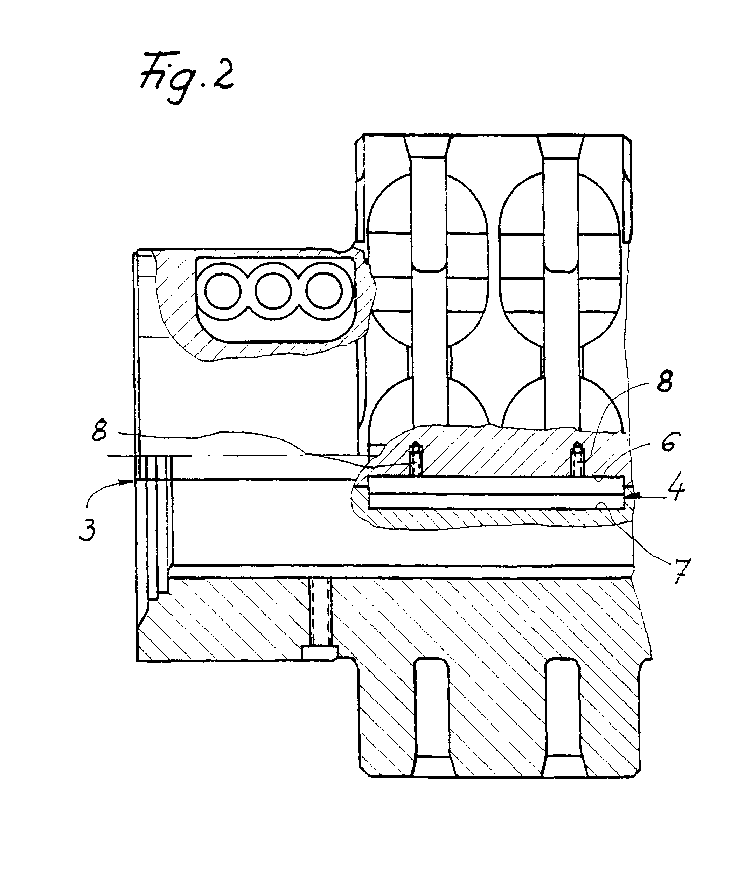

- Figur 2: das Kettenrad in Vorderansicht, teilweise aufgebrochen beziehungsweise geschnitten.

Das in der Zeichnung dargestellte Antriebskettenrad für Kettenstetigförderer im Bergbau besteht aus zwei Kettenradteilstücken (Segmenten) 1, 2 mit radial gerichteten Trennstellen 3. Die Kettenradteilstücke weisen axiale Verlängerungen 4 beidseitig des Mittelbereiches auf, die mittels tangential gerichteter Verbindungsschrauben verbindbar sind, was bei 5 angedeutet ist. Um zu vermeiden, daß diese Verbindungsschrauben beim Betrieb des Kettenrades abreißen,sind zur Verhinderung der elastischen Aufbiegung der Segmente an der Trennstelle 3 in die Trennstelle paßfederartige Mittel 4 eingesetzt. Dazu sind im Ausführungsbeispiel Profilstäbe quadratischen Querschnitts als paßfederartige Mittel 4 vorgesehen, die in achsparallel zur Kettenradachse 5 gerichtete Ausnehmungen 6,7 der beiden Teilstücke 1,2 an der Trennstelle eingreifen. Die Einsatzrichtung der Profilstäbe 4 ist dabei parallel zueinander und parallel zur Zusammenfügungsrichtung der Teilstücke 1,2 gerichtet,so daß die Teilstücke durch Parallelverschiebung aufeinander zu zusammengefügt werden können und die paßfederartigen Mittel 4 in die entsprechenden Ausnehmungen 6,7 mit Paßsitz eingreifen. Dabei sitzen die paßfederartigen Mittel 4 jeweils zur Hälfte ihres Querschnittes in der Ausnehmung 6 des einen Segmentes 1 und in der Ausnehmung 7 des anderen Segmentes 2. Die paßfederartigen Mittel 4 sind dabei im mit Zahnung versehenen Mittelteil des Kettenrades angeordnet. Zusätzlich können die paßfederartigen Mittel 4 Demontagehilfsschrauben 8 aufweisen, mittels derer sie aus dem Paßsitz der entsprechenden Ausnehmung (im Ausführungsbeispiel der Ausnehmung 6) herausdrängbar sind.

Durch die Erfindung wird in einfacher Weise und ohne großen Aufwand erreicht, daß eine Aufbiegung der Segmente 1,2 im Bereich der Trennstelle vermieden wird, so daß auch die Abrißgefahr der Verbindungsschrauben 5 erheblich gemindert, wenn nicht gar unterbunden ist.

## Patentansprüche

1. Kettenstetigförderer-Antriebskettenrad zur Verwendung im Bergbau, bestehend aus zwei Kettenradteilstücken mit radial gerichteten Trennstellen, wobei die Kettenradteilstücke einen mit Zahnung versehenen Mittelteil und zahnungsfreie axiale Verlängerungen aufweisen, wobei die Verlängerungen mittels einer Mehrzahl tangential gerichteter, in Richtung der Kettenradachse nebeneinander angeordneter Verbindungsschrauben verbindbar sind, **dadurch gekennzeichnet**, daß in die Trennstelle (3) der Kettenradteilstücke (1, 2) paßfederartige Mittel (4) eingesetzt sind, die die Trennfuge überbrükken und daß die paßfederartigen Mittel (4) lediglich im mit Zahnung versehenen Mittelteil des Antriebskettenrades angeordnet sind.

2. Kettenstetigförderer-Antriebskettenrad nach Anspruch 1, dadurch gekennzeichnet, daß die paßfederartigen Mittel (4) aus an jeder Trennstelle (3) angeordneten Bolzen bestehen, die in parallel zueinander und parallel zur Zusammenfügungsrichtung der Teilstücke (1, 2) gerichtete passende Ausnehmungen (6, 7) eingesetzt sind.

3. Kettenstetigförderer-Antriebskettenrad nach Anspruch 1, dadurch gekennzeichnet, daß die paßfederartigen Mittel (4) aus Profilstäben, insbesondere quadratischen oder rechteckigen Querschnitts, bestehen, die in achsparallel zur Kettenradachse (5) gerichtete Ausnehmungen (6, 7) der beiden Teilstücke (1, 2) eingreifen, wobei die Einsatzrichtung der Profilstäbe in die Ausnehmungen (6, 7) parallel zur Zusammenfügungsrichtung der Teilstücke (1, 2) verläuft.

4. Kettenstetigförderer-Antriebskettenrad nach einem der Ansprüche 1 bis 3, dadurch gekennzeichnet, daß die paßfederartigen Mittel (4) jeweils zur Hälfte ihres Querschnitts oder ihrer Länge passend in jeweils eine Ausnehmung der beiden Teilstücke einsetzbar sind.

5. Kettenstetigförderer-Antriebskettenrad nach einem der Ansprüche 1 bis 4, dadurch gekennzeichnet, daß die paßfederartigen Mittel (4) Demontagehilfsschrauben (8) aufweisen, mittels derer sie aus dem Paßsitz der Ausnehmung (6, 7) herausdrängbar sind.

## Claims

1. Continuous chain transporter chain wheel for use in the mining industry, comprising two chain wheel segments with radially aligned areas of separation, the chain wheel segments having a toothed middle part and toothless axial prolongations, the prolongations being connected by means of a plurality of tangentially aligned connecting bolts which are arranged next to one another in the direction of a chain wheel axle, **characterized** in that feather key-like means (4) are inserted into the area of separation (3) of the chain wheel segments (1) bridging the separation and that the feather key-like means are located only in the toothed middle part of the chain wheel.

2. Continuous chain transporter chain wheel according to claim 1, characterized in that the feather key-like means (4) consist of pins which are located at each area of separation (3) and which are inserted in appropriate recesses (6, 7) running parallel to one another and parallel to the direction of joining of the segments (1, 2).

3. Continuous chain transporter chain wheel according to claim 1, characterized in that the feather key-like means (4) consist of profile rods, especially of quadratic and rectangular cross section, which fit into the recesses (6, 7) of the two segments (1, 2) which are pointed axially parallel to the chain wheel axis (5), the direction of insertion of the profile rods into the recesses (6, 7) running parallel to the direction of joining of the segments (1, 2).

4. Continuous chain transporter chain wheel according to one of the claims 1 to 3. characterized in that the feather ley-like means (4) can be inserted up to half their cross section or their length appropriately into one recess of two segments.

5. Continuous chain transporter chain wheel according to one of the claims 1 to 4. characterized in that the feather ley-like means (4) comprise auxiliary dismounting bolts (8) by means of which they can be forced out of the snug fit of the recess (6, 7).

## Revendications

1. Roue d'entraînement à chaînes pour un engin de manutention continue à chaînes, destinée à être utilisée dans l'exploitation des mines, constituée par deux tronçons de la roue à chaînes dont les endroits de séparation sont orientés en direction radiale, dans laquelle les tronçons de la roue à chaînes présentent une partie médiane dentée et des prolongements axiaux non dentés, les prolongements pouvant être reliés au moyen d'une multitude de vis de liaison orientées en direction tangentielle et disposées les unes à côté des autres dans la direction de l'axe de la roue à chaînes, caractérisée en ce que des moyens (4) analogues à des clavettes parallèles qui chevauchent les joints sont insérés dans l'endroit de séparation (3) des tronçons (1, 2) de la roue à chaînes, et en ce que les moyens (4) analogues à des clavettes parallèles sont disposés uniquement dans la partie médiane dentée de la roue d'entraînement à chaînes.

2. Roue d'entraînement à chaînes pour un engin de manutention continue à chaînes selon la revendication 1, caractérisée en ce que les moyens (4) analogues à des clavettes parallèles sont constitués par des boulons disposés à chaque endroit de séparation (3), qui sont insérés dans des évidements ajustés (6, 7) orientés parallèlement l'un à l'autre et parallèlement à la direction d'assemblage des tronçons (1, 2).

3. Roue d'entraînement à chaînes pour un engin de manutention continue à chaînes selon la revendication 1, caractérisée en ce que les moyens (4) analogues à des clavettes parallèles sont constitués par des barres profilées, en particulier de section transversale carrée ou rectangulaire, qui viennent s'insérer dans des évidements (6, 7) pratiqués dans les deux tronçons (1, 2) et orientés parallèlement à l'axe (5) de la roue à chaînes, dans laquelle la direction d'insertion des barres profilées dans les évidements (6, 7) s'étend parallèlement à la direction d'assemblage des tronçons (1, 2).

4. Roue d'entraînement à chaînes pour un engin de manutention continue à chaînes selon l'une quelconque des revendications 1 à 3, caractérisée en ce que les moyens (4) analogues à des clavettes parallèles peuvent venir s'insérer respectivement jusqu'à la moitié de leur section transversale ou de leur longueur, en ajustage serré dans respectivement un évidement des deux tronçons.

5. Roue d'entraînement à chaînes pour un engin de manutention continue à chaînes selon l'une quelconque des revendications 1 à 4, caractérisée en ce que les moyens (4) analogues à des clavettes parallèles présentent des vis auxiliaires de démontage (8) à l'aide desquelles ils peuvent être poussés hors de l'ajustement fin de l'évidement (6, 7).
